Europäisches Patentamt

European Patent Office

Office européen des brevets

(11) Publication number: 0 383 338 A2

# EUROPEAN PATENT APPLICATION

(21) Application number: 90103028.8

(22) Date of filing: 16.02.90

(51) Int. Cl.5: G01B 7/06

(30) Priority: 17.02.89 NO 890700

(43) Date of publication of application:
22.08.90 Bulletin 90/34

(84) Designated Contracting States:
AT BE CH DE DK ES FR GB GR IT LI LU NL SE

(71) Applicant: PHILLIPS PETROLEUM COMPANY
5th and Keeler
Bartlesville Oklahoma 74004(US)

Applicant: Standahl, Oddmund
Frekadalsvegen 9
NO-5306 Erdal(NO)

Applicant: Solberg, Per
Framvei 46
NO-1422 Svartskog(NO)

(72) Inventor: Standahl, Oddmund
Frekadalsvegen 9
5306 Erdal(NO)
Inventor: Solberg, Per
Framvei 46
1442 Svartskog(NO)

(74) Representative: Dost, Wolfgang,
Dr.rer.nat.,Dipl.-Chem. et al
Patent- & Rechtsanwälte Bardehle .
Pagenberg . Dost . Altenburg . Frohwitter .
Geissler & Partner Galileiplatz 1 Postfach 86
06 20
D-8000 München 86(DE)

(54) Method and system for monitoring wall thickness of pipelines, pressure vessels etc. and a sensor to be used for the same purpose.

(57) A method for monitoring the wall thickness of a pipeline (13) which is carried out via an electric circuit through several sensors (10) which have been mounted inside the pipewall (12). The sensors (10) have a sensor element (17) which checks the remaining wall thickness within the sensor element (17).

A monitoring system which includes an electric circuit and several sensors (10) mounted inside the wall of the object. Each sensor has a sensor element (17) made of magnesium metal and is remotely monitored via an electric circuit.

A sensor (10) which consists of a cylindrical, pluglike mechanical device which is inserted, and which includes a sensor element (17) of conductive, easily corrosive material such as magnesium metal, and an electrically insulated holder (18).

EP 0 383 338 A2

FIG.1

This invention relates to a method for monitoring a certain mimium limit for acceptable wall thickness of an object which is to be monitored, such as a medium-transporting pipeline or a medium-receiving pressure vessel, where the monitoring takes place by means of an electric circuit through several sensors which have been mounted in the wall of the object.

Furthermore, the invention concerns a system for monitoring of a certain minimum limit for acceptable wall thickness in an object which is to be monitored, such as a medium transporting pipeline or a medium-receiving pressure vessel, including an electric circuit through several sensors which have been mounted in the wall of the object.

In addition, the invention concerns a sensor to be used in the method and/or system according to the invention.

Since the first petroleum refineries were built in the USA, there has been a major need for corrosion control of piping and pressure vessels in order to avoid explosions as a result of cracks in the pipeline and pressure vessels due to reduced wall thickness. Surveys which were carried out after the accidents showed that the pipelines and pressure vessels in particular tended to crack at certain places, i.e. in connection with welding seams, in bends, T-joints and other places in which flow changes in the system tended to occur.

In order to correct this, several holes were drilled on each side of the welding seams, in bends, T-joints etc. The holes were not completely through-going, but were drilled to a point which was the stipulated minimum limit for acceptable wall thickness. As soon as oil started to drip or gas flowed through the hole, this indicated that corrosion had reached the above-mentioned minimum limit for acceptable wall thickness, and thus, the leak medium warned that the pipeline or pressure vessel had to be inspected more closely for possible replacement. This method was simple and in some connections sufficiently safe, and is still being used today, for instance in some pipelines in certain onshore areas in the USA. In cases where it was impossible to get access to the location of the leak, this monitoring system was useless.

Later, this method has been replaced by other methods based on new technology such as application of ultrasound, in that ultrasound was used to measure the wall thickness at places which required monitoring. Such measurements have been carried out for a long time now, but the accuracy is inadequate and the method is not very reliable. This applies in particular to wall thicknesses of less than 10mm in connection with pipes which have a diameter of less than approximately 13 mm. Although the ultrasound method has been improved recently, such measurements are inadequate in some cases and under certain conditions, and in any case, we are dependent on the operator's accurate work as well as the calibration of the ultrasound equipment.

The invention aims at obtaining a simpler and presumably far more accurate method for monitoring the acceptable wall thickness of pipelines and pressure vessels.

This method is characterized by sensors in the form of a plug which are mounted from the outside in the holes drilled in the wall of the object, with a sensor element placed in a layer close to the stipulated minimum limit, and with the sensor element as reference point the remaining wall thickness is radially checked within the sensor element.

By mounting sensors in the form of a plug in the wall of the object, it is possible to prevent or limit oil or gas leaks in cases where the wall thickness has been reduced to the abovementioned minimum limit. In addition, it is possible to effectively detect any leak which comes into contact with the sensor by using a sensor element which is sensitive to contact with such leak media. By means of ultrasound or some other method, it is also possible for the sensor element to check the wall thickness according to the usual measuring menthods for checking the extent of a possible thickness reduction. As soon as an oil or gas leak reaches the sensor element, it will be possible to give warning to a remotely located center. By means of scanning it is also possible to carry out routine checks of the condition of the system. In this connection, it is for instance possible to use a voltage of 6, 12, 24 or 48V as required, in a monitoring circuit.

According to the invention, the monitoring system is characterized by each sensor, which has been mounted from the outside in a hole in the wall of the object, having a sensor element which is axially located at the innermost end of the hole in a layer close to the stipulated minimum limit. The sensor element which has relatively thin walls, consists of a conductive, easily corrosive material such as magnesium metal, and the sensors have been connected to a remotely monitored electric circuit via electrodes which extend vertically into the sensor element and which are electrically connected to each other by means of the sensor element.

According to the invention, the monitoring system allows the easily corrosive material in the sensor element to corrode as soon as it comes into contact with the leak medium where the wall thickness of the object has been reduced accordingly. This means that the conductive sensor element which creates an electric connection between the electrodes in the sensor, breaks the circuit as soon as it has been corroded by the leak medium. A signal can then effectively be transmitted via the monitoring circuit to the remotely located monitoring center in the form of a power failure signal, which then gives warning to the monitoring center in the form of a sound and/or light signal.

According to the invention, a sensor is characterized by consisting of a largely cylindrical, pluglike, mechanical device which is inserted, and it includes an electric circuit monitored sensor element consisting of conductive, easily corrosive material such as magnesium metal and an electrically insulated holder which keeps the sensor element stable in an active monitoring position in a hole in the pipeline which is to be monitored.

By means of simple remedies it is, thus, possible to establish effective monitoring of the wall thickness of the object in order to detect anticipated corrosion, erosion or wear on the parts of the object on which corrosion is expected to occur.

According to a preferred design, the sensor is characterized by the vessel, which is made of electrically insulating, sealing material with compressive strength such as bakelite or stabilized fluid plastic, being installed by means of a mounting device such as a Seeger ring or threads to keep the sensor stable with tight fit in a hole in the object, and the sensor element, which has less radial extent than the holder, being enclosed by a thin plastic film.

By means of the Seeger ring or some other suitable mounting medium it is possible to install the sensor in a controlled and accurate way in the hole and keep the sensor holder stable in the hole in an effective way, at the same time as the sensor element is effectively protected against unforeseen corrosion in the hole before an anticipated leak occurs.

Additional information about the invention will be given in the subsequent description with reference to the enclosed drawings in which:

Figure 1 shows a schematic display of a monitoring system with a number of sensors which have been mounted in each respective hole in a pipewall and which have been coupled in series in a joint circuit.

Figure 2 shows the sensor element on a large scale and in longitudinal section.

The invention in relation to a pipeline will be described below, but the invention may also be applied on other objects, such as pressure vessels or similar vessels or on equipment connected to pipelines, tanks, pressure vessels etc. although no examples of that have been given in this document.

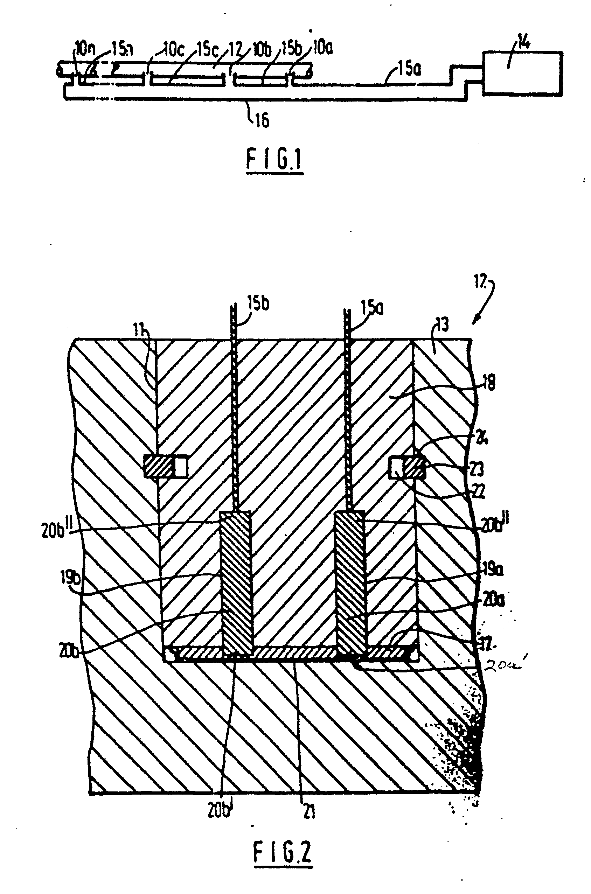

Figure 1 shows a monitoring system with a number of sensors (10) as shown in more detail by 10a, 10b, 10c and 10n, which have been mounted in their respective holes (11) by insertion from the outside into a pipewall (12 and 13). The sensors are coupled in series from a remotely controlled center (14) via outgoing, low-voltage, direct current connections (15a, 15b, 15c, 15n) and a feedback connected circuit (16). The center (14) may activate a voltage of for instance 6, 12, 24 or 48 V as required. The pipeline (12) may be monitored by one or several parallel circuits which are controlled separately from the joint center (14). The monitoring may roughly be limited to checking whether each electric circuit is intact. When the circuit is broken, a power failure signal is given causing an alarm to go off at the center.

Figure 2 shows a sensor (10) according to a preferred design of the invention. The sensor (10) is equipped with a sensor element (17) and a holder (18) which are permanently connected to each other in a continuous solid unit. For practical rea sons, the sensor (10) has been designed in the form of a largely cylindrical plug which is installed with tight fit in a holder (11) in the wall (13) of the object which is to be monitored, so that the plug can be kept stable at relatively great tension in the hole. The sensor element (17) has a somewhat smaller diameter than the holder (18) while the holder's (18) diameter has been accurately adjusted to the diameter of the hole.

The sensor element (17) consists of a thin-walled disk which is mounted directly on the terminal surface of the holder (18) and is designed to be inserted to a supporting device at the bottom of the hole (11). The sensor element (17) is made of a conductive, easily corrosive material, such as magnesium metal. It is the intention to use a magnesium metal or magnesium alloy which corrodes easily when influenced by petroleum products (gas, oil etc.) or other media which are to be transferred to or transported by means of the object which is to be monitored.

The holder (18) is made of bakelite, stabilized fluid plastic or other suitable, solid and stable, electrically insulating material. In the holder (18) close to the sensor element, two parallel hollows (19a), (19b) with an average diameter for receiving one electrode each (20a, 20b). The unattached ends of the electrodes (20a', 20b') extend vertically into the sensor element and are connected to each other via the conductive sensor element (17). At the opposite end (20a'', 20b'') the electrodes (20a, 20b) are connected by one wire each, for instance 15a, 15b, in an electric circuit as shown in figure 1.

As soon as the wall thickness of the object (pipeline, container or similar) which is being monitored via the sensor (10) is sufficiently reduced (corroded), so that the sensor element comes into contact with the leak medium of the object mentioned above, the leak medium will cause the sensor's sensor element to corrode and thus, relatively quickly, bring about a power failure in the connection between the electrodes 20a and 20b. A signal is then given via the above-mentioned electric circuit, causing a light and/or sound signal to be given at the center.

In order to prevent the sensor element from corroding before the leak medium penetrates the sensor element as a result of corrosion or wear on the object to be monitored, the sensor element has been enclosed in a thin wall of plastic film (21). The plastic film is made of a material which may easily be destroyed by the leak medium, but which must be resistant to other media such as water humidity etc.

In order to prevent the plastic film (21) from being destroyed during insertion of the sensor element into the hole drilled (11), the diameter of the sensor element (17) is smaller than that of the holder (18).

In the example shown, the holder is equipped with a thread (22) which can take a Seeger-ring (23), which with a catch effect may be locked in a thread (24) in the hole drilled (11). The sensor (10) may then, by means of a relatively simple insertion operation, be pushed into place and kept stable with great strength in the hole drilled (11). By using bakelite, stabilized fluid plastic or some other suitable material one can, at the same time as effective positioning of the holder by means of a locking device (and partly by friction as a result of installation) is ensured, ensure effective sealing between the hole drilled and the holder. Thus, the pluglike sensor is kept stable against fluid or gas pressures of more than 1000 Bar and prevents fluid leaks from passing the sensor.

Instead of a locking device in the form of a Seeger ring it is for instance possible to use an outside thread on the holder and an inside thread in the hole drilled. In that case, the holder might consist of two separate parts, for instance an axially innermost cylindrical part of electrically insulating material to keep the sensor element, electrodes as well as wires stable, and an axially outermost ring-shaped part made of steel or some other suitable material which is equipped with threads.

The invention has been described above exclusively as a continuously monitored, standing current controlled circuit. Alternatively, the circuit may be supplied with voltage at intervals in a routine monitoring cycle. Although not illustrated by examples in this document, it might be relevant to use additional equipment for concrete measurements of the wall thickness of the object in addition to the above-mentioned remotely monitored, standing current controlled alarm system. It may especially be relevant to use separate ultrasound equipment or ultrasound equipment connected to sensors in the monitoring circuit described above.

It should be added that it will not lead to strength problems that the objects which are to be monitored have had holes drilled into them for the purpose of mounting sensors.

This invention may also be used for other purposes than those suggested above. Two electrodes which are connected to an element of electrically insulating material may for instance be inserted into the wear-facing deposit(s) of a rotor part and/or stator part. The elements may be positions in the wearfacing deposit and as soon as the element has been removed due to wear and tear, a conductive contact between the electrodes will be established. As soon as the current connection has been established between the electrodes, a signal will be given in the monitoring circuit, and a light or sound alarm given at a remote place on the basis of the signal received from the monitoring circuit.

## Claims

1. A method for monitoring a stipulated minimum limit for acceptable wall thickness of an object which is to be monitored, such as a medium-transporting pipeline (13) or a medium-receiving vessel, where the monitoring is carried out via an electric circuit through several sensors mounted in the wall (12) of the object,
**characterized by**
the sensors (10) being inserted from the outside of the object into holes (11) in the wall of the object (12), using a sensor element (17) which has been mounted in a layer close to the stipulated minimum limit, and,
by the sensor element (17) as reference point, radially checking the remaining wall thickness within the sensor element (17).

2. A system for monitoring a stipulated minimum limit for acceptable wall thickness of an object which is to be monitored, such as a medium-transporting pipeline (13) or a medium-receiving vessel, including an electric circuit (15a-15n, 16) through several sensors (10) which have been mounted in the wall of the object,
**characterized by**
each sensor (10a-10n), which has been mounted from the outside of the object in each respective hole drilled, having a sensor element (17) mounted axially at the innermost end of the hole in a layer close to the stipulated minimum limit,
the sensor element (17), which has a relatively thin wall, consisting of a conductive, easily corrosive material such magnesium metal, and
the sensors (10a-10n) being connected in a remotely monitored electric circuit (15a-15n, 16) via electrodes (19a, 19b) which extend vertically into each sensor element (17) and which are electrially connected to each other via the sensor element (17).

3. A sensor to be applied in the method according to claim 1 and/or to be applied according to claim 2, **characterized by**
the sensor (10) consisting of a largely cylindrical, pluglike mechanical device which is inserted, and
that it includes a sensor element monitored by an electric circuit, the sensor element consisting of easily corrosive material such as magnesium metal and an electrically insulated holder (18) to keep the sensor element (17) stable in an active monitoring position in a hole (11) which has been drilled in the object which is to be monitored.

4. A sensor in accordance with claim 3, **characterized by**
the holder (18) which is made of electrically insulating, sealing material with compressive strength such as bakelite and stabilized fluid plastic or similar, being designed, by means of a mounting device such as a Seeger-ring (23) or threads, to keep the sensor (10) with tight fit in a hole (11) which has been drilled in the object to be monitored, and the sensor element (17) which has a smaller radial extent than the holder, being enclosed by a thin protective film (21).

F I G.1

F I G.2